# EUROPÄISCHE PATENTSCHRIFT

(11) **EP 0 499 893 B1**
(45) Veröffentlichungstag und Bekanntmachung des Hinweises auf die Patenterteilung: **12.06.1996**
(21) Anmeldenummer: 92101964.2
(22) Anmeldetag: 06.02.1992
(51) Int. Cl.: G11B 27/28, G11B 15/02, H04N 5/782, G11B 27/34, G11B 5/02, G11B 5/008, G11B 27/11, G11B 27/10

(54) **Videorecorder zur Aufzeichnung und Wiedergabe von Textsignalen als Begleitinformationen zu Schrägspur-Audioaufzeichnungen**
Videorecorder for recording and reproducing textsignals as accompanying information to helical audio records
Magnétoscope pour enregistrer et reproduire des signaux de textes comme information d'accompagnement aux enregistrements audio hélicoidaux

(30) Priorität: 22.02.1991 DE 4105617
(43) Veröffentlichungstag der Anmeldung: 26.08.1992
(73) Patentinhaber: GRUNDIG E.M.V. Elektro-Mechanische Versuchsanstalt Max Grundig GmbH & Co. KG, D-90762 Fürth (DE)
(72) Erfinder: Mederer, Werner, Grundig E.M.V., Max Grundig, W-8510 Fuerth (DE); Stacho, Reinhard, Grundig E.M.V., Max Grundig, W-8510 Fuerth (DE); Spanner, Egbert, Grundig E.M.V., Max Grundig, W-8510 Fuerth (DE); Borgelt, Michael, Grundig E.M.V., Max Grundig, W-8510 Fuerth (DE)

(56) Entgegenhaltungen:
- EP-A- 0 166 861
- EP-A- 0 274 382
- EP-A- 0 363 653
- DE-A- 3 735 539
- GB-A- 2 170 347
- US-A- 4 575 772
- US-A- 4 870 515
- MC Nr. 3, 1981, MUNCHEN,DE Seiten 52 - 57 THILO 'Datenspeicherung mit Videorecorder'
- PATENT ABSTRACTS OF JAPAN vol. 13, no. 231 (P-878)29. Mai 1989
- FUNKSCHAU. Bd. 63, Nr. 10, 3. Mai 1991, MUNCHEN DE Seiten 54 - 56 , XP000229384 'Das Video-Archiv ist eingebaut'

## Beschreibung

Die Erfindung betrifft einen Videorecorder mit den im Oberbegriff des Anspruchs 1 angegebenen Merkmalen, wie er beispielsweise aus der Zeitschrift Funktechnik 38 (1983), Heft 12, Seiten 498 bis 500, bekannt ist.

Derartige HiFi-Videorecorder können entweder zur gleichzeitigen Schrägspur-Aufzeichnung bzw. Wiedergabe von Video- und qualitativ hochwertigen Audiosignalen, die zu einer gemeinsamen Fernsehsendung gehören, oder ausschließlich zur Schrägspur-Aufzeichnung bzw. Wiedergabe von qualitativ hochwertigen Audiosignalen im Sinne eines HiFi-Audiorecorders verwendet werden.

Die Aufgabe der Erfindung besteht darin, einen Videorecorder mit den im Oberbegriff des Anspruchs 1 angegebenen Merkmalen derart weiterzubilden, daß dann - wenn der Videorecorder im Sinne eines HiFi-Audiorecorders verwendet wird - Begleitinformationen zur Audioaufzeichnung für den Benutzer zur Verfügung gestellt werden können.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst.

Vorteilhafte Weiterbildungen des beanspruchten Videorecorders ergeben sich aus den Ansprüchen 2 bis 11.

Die Ansprüche 12 und 19 beschreiben einen Videorecorder zur Wiedergabe von Audiosignalen.

Vorteilhafte Weiterbildungen des im Anspruch 12 genannten Videorecorders ergeben sich aus den Ansprüchen 13 bis 18.

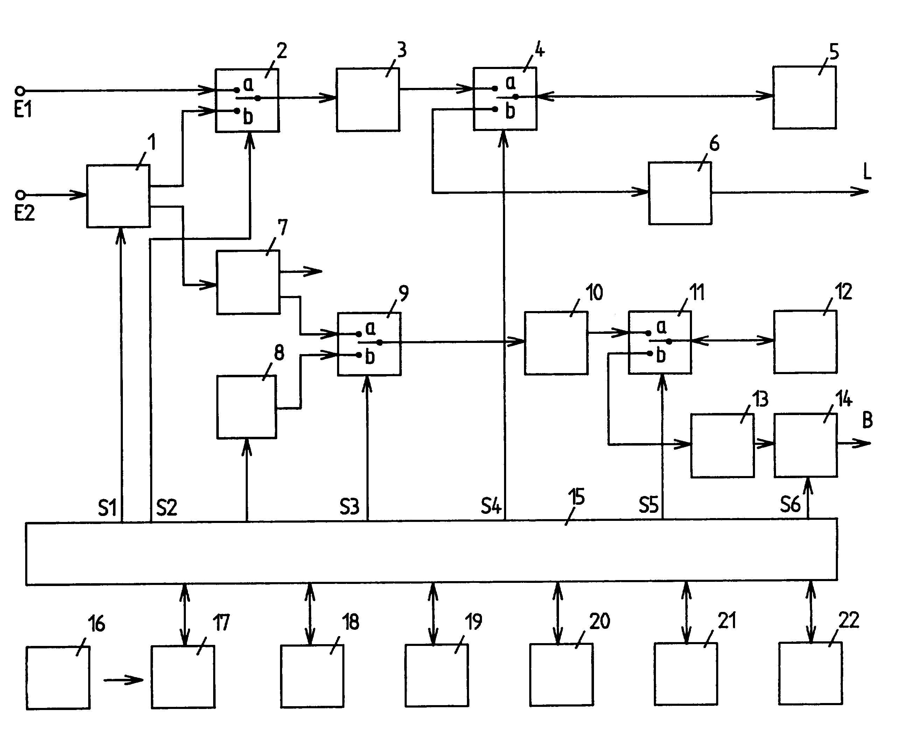

Im folgenden wird die Erfindung anhand des in der Figur gezeigten Videorecorders beispielhaft erläutert. Dieser weist im einzelnen auf: Einen Eingang E1 für ein Audiosignal, einen Eingang E2 für ein aus einem Audiosignal und einem Videosignal bestehenden Fernsehsignal, eine aus einem Tuner und einer ZF-Stufe bestehenden Eingangsschaltung 1, einen Schalter 2, einen Audiosignalfrequenzmodulator 3, einen ersten Aufnahme-/Wiedergabe-Umschalter 4, rotierende Audioköpfe 5, einen Frequenzdemodulator 6, eine Luminanz-/Chrominanz-Trennschaltung 7, einen Textgenerator 8, einen Schalter 9, einen Videosignalfrequenzmodulator 10, einen zweiten Aufnahme-/Wiedergabe-Umschalter 11, rotierende Videoköpfe 12, einen Frequenzdemodulator 13, eine Bildspeichereinheit 14, eine Steuerschaltung 15, einen Fernbedienungsgeber 16, einen Fernbedienempfänger 17, einen Textspeicher 18, einen Bandstandsspeicher 19, einen Steuerspurkopf 20, einen Bandzähler 21 und einen Programmierspeicher 22.

Bei einer ersten Ausführungsform der Erfindung läuft der Aufzeichnungsvorgang wie folgt ab:

Ein dem Videorecorder über den Eingang E1 zugeführtes Audiosignal, welches aus einer Folge unterschiedlicher Musikstücke besteht, wird über den Schalter 2, dessen beweglicher Kontakt von der Steuerschaltung 15 über die Steuerleitung S2 in die Schaltstellung a gebracht wurde, dem Audiosignal-Frequenzmodulator 3 zugeführt. Dort wird das Audiosignal einem Träger zur Bildung eines frequenzmodulierten Audiosignals aufmoduliert, wobei die Trägerfrequenz etwa im Bereich von 1.5 MHz liegt. Das frequenzmodulierte Audiosignal wird über den Aufnahme-/Wiedergabe-Umschalter 4, dessen beweglicher Kontakt von der steuerschaltung 15 über die Steuerleitung S4 in die Schaltstellung a gebracht wurde, den rotierenden Audioköpfen 5 zugeführt und mittels dieser in Schrägspuren eines Videomagnetbandes aufgezeichnet, wobei die Eindringtiefe der Audioaufzeichnung in das Magnetband aufgrund der vergleichsweise niederfrequenten Lage des frequenzmodulierten Audiosignals groß ist.

Während dieses Aufzeichnungsvorganges steuert die Steuerschaltung 15 den Steuerspurkopf 20 derart an, daß in der Steuerspur impulsförmige Referenzsignale (CTL-Impulse) für die Servoschaltungen des Videorecorders aufgezeichnet werden. Zu Beginn jedes der Musikstücke werden die Steuerimpulse entweder in Ansprache auf einen mittels des Fernbedienungsgebers 16 eingegebenen Befehl oder automatisch, z.B. unter Verwendung einer Pausenkennung zwischen zwei Musikstücken, zur Aufzeichnung eines Markiersignals impulsbreitenmoduliert aufgezeichnet, so daß beim späteren Wiedergabebetrieb ein gezielter Suchlauf nach dem Beginn eines jeden der Musikstücke erfolgen kann.

Wurde auf die vorstehend beschriebene Weise eine Aufzeichnung einer Folge von unterschiedlichen Musikstücken durchgeführt, wird das Magnetband an den Anfang der Aufzeichnung zurückgespult.

Im nächsten Schritt gibt der Benutzer mittels der alphanumerischen Tasten des Fernbedienungsgebers 16 den Titel des ersten aufgezeichneten Musikstückes ein. Die dem Titel des ersten aufgezeichneten Musikstückes entsprechenden Daten werden in einem Textspeicher 18 des Videorecorders zwischengespeichert. Nach der Zwischenspeicherung des Titels des ersten aufgezeichneten Musikstückes wird der Steuerschaltung 15 durch Betätigung einer Taste des Fernbedienungsgebers 16 ein Steuerbefehl gegeben, aufgrund dessen die Steuerschaltung 15 die Aufzeichnung des zwischengespeicherten Titels auslöst. Dazu werden die im Textspeicher 18 zwischengespeicherten Signale über den Textgenerator 8, den Schalter 9, welcher von der Steuerschaltung 15 über die Steuerleitung S3 in die Schaltstellung b gebracht wurde, dem Frequenzmodulator 10, welcher bei der Aufzeichnung eines Fernsehsignals zur Frequenzmodulation des Luminanzsignals verwendet wurde, und den Aufzeichnungs-/Wiedergabe-Umschalter 11, welcher von der Steuerschaltung über die Steuerleitung S5 in die Schaltstellung a gebracht wurde, den rotierenden Videoköpfen 12 zugeführt und mittels dieser in denselben Spuren aufgezeichnet, in denen bereits die Audiosignale aufgezeichnet sind.

Der zur Frequenzmodulation der Textsignale verwendete Träger liegt in einem höheren Frequenzbereich als der Träger, der zur Frequenzmodulation der Audiosignale verwendet wurde. Folglich ist die Eindringtiefe der Textaufzeichnung in das Magnetband geringer als die Eindringtiefe der Audioaufzeichnung, so daß eine Tiefenmultiplexaufzeichnung entsteht.

Bei der vorstehend beschriebenen Aufzeichnung der Textsignale werden keine neuen Steuerspurimpulse aufgezeichnet. Vielmehr werden die bereits aufgezeichneten Steuerspurimpulse mittels des Steuerspurkopfes 20 gelesen und zur Steuerung des Bandvorschubs verwendet.

Die Aufzeichnung der Textsignale, die dem Titel des ersten Musikstückes entsprechen, erfolgt solange, bis die Steuerschaltung, der die wiedergegebenen Steuerspurimpulse zugeführt werden, das nächste durch Impulsbreitenmodulation der Steuerspurimpulse aufgezeichnete Markiersignal erkennt. Die Bandstelle, an der dieses Markiersignal aufgezeichnet ist, entspricht dem Ende des ersten und dem Beginn des zweiten aufgezeichneten Musikstückes.

Im nächsten Schritt gibt der Benutzer mittels der alphanumerischen Tasten des Fernbedienungsgebers 16 den Titel des zweiten aufgezeichneten Musikstückes ein. Die Zwischenspeicherung dieses Titels und dessen Aufzeichnung erfolgen ebenso, wie es oben im Zusammenhang mit dem Titel des ersten aufgezeichneten Musikstückes beschrieben wurde.

Anschließend werden auf dieselbe Art und Weise die Titel der weiteren Musikstücke eingegeben, zwischengespeichert und aufgezeichnet.

Bei der vorstehend beschriebenen Ausführungsform der Erfindung werden folglich die bei einer Verwendung eines Videorecorders im Sinne eines HiFi-Audiorecorders normalerweise unbenutzten Videoschrägspuren zur Aufzeichnung des Titels des an der entsprechenden Bandstelle aufgezeichneten Musikstückes verwendet.

Bei einem darauffolgenden Wiedergabevorgang erhält der Benutzer folglich zusätzlich zur akustischen Wiedergabe des Musikstückes den Titel dieses Musikstückes am Bildschirm eines an den Videorecorder angeschlossenen Fernsehempfänger angezeigt.

Eine zweite Ausführungsform der Erfindung, die einer Weiterbildung der ersten Ausführungsform entspricht, unterscheidet sich von der ersten in folgenden Punkten:

Während der Aufzeichnung des Audiosignals oder der des Textsignals werden die Steuerspurimpulse zur Aufzeichnung eines Kennsignals zusätzlich impulsbreitenmoduliert. Dieses Kennsignal kennzeichnet die Aufzeichnung als eine reine HiFi-Audioaufzeichnung im Unterschied zu einer Fernsehsignalaufzeichnung, bei der die zugehörige Toninformation ebenfalls in den Schrägspuren aufgezeichnet ist.

Wird ein Magnetband, auf welchem ein derartiges Kennsignal aufgezeichnet ist, zu einem Wiedergabevorgang in einen herkömmlichen Videorecorder eingelegt, dann erfolgt eine normale Wiedergabe, bei welcher der Titel des momentanen Musikstückes am Bildschirm eines an den Videorecorder angeschlossenen Fernsehempfängers dargestellt wird. Die Vorderflanken der wiedergegebenen Steuerspurimpulse werden dabei in grundsätzlich bekannter Weise zur Steuerung des Bandvorschubs verwendet. Die durch die Impulsbreitenmodulation der Steuerspurimpulse aufgezeichneten Informationen, die im Zeitpunkt des Auftretens der Rückflanken der Steuerspurimpulse liegen, werden nicht ausgewertet.

Wird das Magnetband hingegen in einen Videorecorder gemäß der zweiten Ausführungsform zu einem Wiedergabevorgang eingelegt, dann erkennt die Steuerschaltung 15, der die aus der Steuerspur wiedergegebenen Steuerspurimpulse zugeführt werden, daß es sich bei der wiedergegebenen Aufzeichnung um eine reine HiFi-Audioaufzeichnung handelt und steuert den Bildschirm des an den Videorecorder angeschlossenen Fernsehempfängers dunkel. Erst dann, wenn mittels des Fernbedienungsgebers 16 ein Steuerbefehl eingegeben wird, bringt die Steuerschaltung 15 den Aufzeichnungs-/Wiedergabe-Umschalter 11 über die Steuerleitung S5 in die Schaltstellung b, so daß die mittels der rotierenden Videoköpfe 12 aus den Videoschrägspuren wiedergegebene, frequenzmodulierte Titelinformation dem Frequenzdemodulator 13 zugeführt und dort demoduliert wird. Das demodulierte Signal wird über die Bildspeichereinheit 14 dem Bildschirm des an den Videorecorder angeschlossenen Fernsehempfängers zugeführt. Bei dieser Ausführungsform wird folglich der Titel des momentan wiedergegebenen Musikstückes nur dann am Bildschirm angezeigt, wenn dies der Benutzer wünscht.

Eine dritte Ausführung der Erfindung, die einer Weiterbildung der zweiten Ausführungsform entspricht, unterscheidet sich von der vorstehend beschriebenen in folgenden Punkten:

Während der Aufzeichnung der Musiksendungen läuft ein Bandzähler 21 mit, dessen Zählerstand die momentane Bandposition beschreibt. Der Bandstand von Anfang und Ende jedes des aufgezeichneten Musikstücke wird im Bandstandsspeicher 19 abgespeichert.

Nachdem die Aufzeichnung der Musikstücke und der Steuerspurimpulse erfolgt ist, gibt der Benutzer mittels der alphanumerischen Tasten des Fernbedienungsgebers 16 die Titel sämtlicher aufgezeichneter Musikstücke ein. Die zugehörigen Daten werden im Textspeicher 18 des Videorecorders zwischengespeichert. Nach dieser Zwischenspeicherung wird der Steuerschaltung 15 durch Betätigung einer Taste des Fernbedienungsgebers 16 ein Startbefehl gegeben, aufgrund dessen die Steuerschaltung 15 die Aufzeichnung sämtlicher zwischengespeicherter Titel auslöst. Die Aufzeichnung dieser Titel erfolgt in einer oder mehreren aufeinanderfolgenden Schrägspuren, je nachdem, wie groß die Anzahl der Titel ist.

Bei der Wiedergabe werden die mittels der rotierenden Videoköpfe 12 wiedergegebenen Titelsignale, die einem Inhaltsverzeichnis der Magnetbandkassette entsprechen, im Frequenzdemodulator 13 demoduliert und in der Bildspeichereinheit 14, die bei dieser Ausführungsform aus einem oder mehreren Halbbildspeichern besteht, zwischengespeichert. Die zwischengespeicherten Signale werden in Ansprache auf einen mittels des Fernbedienungsgebers 16 eingegebenen Befehl in Tabellenform auf dem Bildschirm des an an den Videorecorder angeschlossenen Fernsehempfängers dargestellt. Ist der Umfang der Tabelle größer als eine Bildschirmseite, dann kann durch einen mittels des Fernbedienungsgebers 16 eingegebenen Befehl zwischen den einzelnen Seiten der Tabelle umgeblättert werden.

Bei der Darstellung des Inhaltsverzeichnisses auf dem Bildschirm ist der Titel des momentan wiedergegebenen Musikstückes optisch markiert. Diese optische Markierung kann beispielsweise dadurch erfolgen, daß die Schriftfarbe des Titel verändert, dem Titel ein blinkender Cursor vorangestellt oder der Titel eingerahmt wird. Diese optische Markierung des Titels des momentan wiedergegebenen Musikstückes ist deshalb möglich, weil der Bandstand der Anfänge und Ende jedes Musikstückes im Speicher 19 abgespeichert ist und andererseits über den Bandzähler 21 eine Information über den momentanen Bandstand vorliegt.

Bei einer vierten Ausführungsform der Erfindung wird die dem Inhaltsverzeichnis der Magnetbandkassette entsprechende Tabelle zu einer Wiedergabeprogrammierung des Videorecorders verwendet.

Um dies zu ermöglichen, wird jeder eingelegten Magnetbandkassette mittels der Zifferntasten des Fernbedienungsgebers 16 eine laufende Nummer zugeordnet. Diese laufende Nummer wird entweder bei der Aufzeichnung der Musikstücke oder bei der Titelaufzeichnung durch Impulsbreitenmodulation der Steuerspurimpulse in der Steuerspur des Magnetbandes aufgezeichnet. Weiterhin ist es auch möglich, nach dem Einlegen einer Kassette durch Lesen der Steuerspur zu überprüfen, ob der eingelegten Kassette bereits eine laufende Nummer zugeordnet ist und - wenn dies nicht der Fall ist - der Kassette mittels der Steuerschaltung 15 eine noch nicht vergebene laufende Nummer zuzuordnen und diese durch Impulsbreitenmodulation der Steuerspurimpulse in der Steuerspur aufzuzeichnen. Ferner ist der Bandstandsspeicher 19 derart dimensioniert, daß er zur Abspeicherung der Bandstände der Anfänge und Enden der einzelnen Musikstücke einer Vielzahl von numerierten Magnetbandkassetten ausgelegt ist. Die Abspeicherung der Bandstände der Anfänge und Enden der einzelnen Musikstücke einer bestimmten Magnetbandkassette erfolgt in einem der Nummer dieser Kassette zugeordneten Speicherbereich des Bandstandsspeichers 19.

Zur genannten Wiedergabeprogrammierung wird der Steuerschaltung 15 durch Betätigung einer Taste des Fernbedienungsgebers 16 ein Programmierbefehl übermittelt. Daraufhin initialisiert die Steuerschaltung 15 die Wiedergabe der dem Inhaltsverzeichnis entsprechenden Tabelle aus den Schrägspuren und die Wiedergabe der Steuerspurimpulse aus der Steuerspur des Magnetbandes. Die genannte Tabelle wird in der Bildspeichereinheit 14 zwischengespeichert und auf dem an den Videorecorder angeschlossenen Bildschirm dargestellt. Bei dieser Darstellung wird vor dem Anfang des Titels des ersten aufgezeichneten Musikstückes ein Cursor eingeblendet. Dieser Cursor kann mittels der Cursor-Steuertasten des Fernbedienungsgebers 16 vor den Anfang des Titels eines gewünschten Musikstückes verschoben werden. Durch Drücken einer Betätigungstaste des Fernbedienungsgebers 16 wird dieses Musikstück als erster Wiedergabewunsch markiert. Die Steuerschaltung 15 erkennt durch Auswertung der wiedergegebenen Steuerspurimpulse die Nummer der eingelegten Magnetbandkassette, holt aus dem dieser Kassette zugeordneten Speicherbereich des Bandstandsspeichers 19 den Anfangs- und Endbandstand des gewünschten Musikstückes und legt diese Informationen in einem ersten Speicherbereich des Programmierspeichers 22 ab.

Ebenso erfolgt die Auswahl weiterer gewünschter Musikstücke und die Abspeicherung der zugehörigen Anfangs- und Endbandstände in weiteren Speicherbereichen des Programmierspeichers 22.

Ist der Videorecorder auf diese Weise vorprogrammiert, dann werden die gewünschten Musikstücke in der gewünschten Reihenfolge wiedergegeben, wobei diese Wiedergabe entweder manuell durch Betätigung einer Taste des Fernbedienungsgebers 16 oder auch automatisch bei Erreichen einer ebenfalls vorprogrammierten Startzeit beginnen kann.

Eine vorteilhafte Weiterbildung dieser Ausführungsform der Erfindung besteht darin, nach dem Einlegen einer Magnetbandkassette einen automatischen Initialisierungslauf zur Ermittlung der momentanen Bandposition durchzuführen. Bei diesem Initialisierungslauf wird das Band kurzzeitig mit erhöhter Geschwindigkeit vor- und zurückgespult. Während dieses Umspulvorganges werden von den Wellen der beiden Bandwickel oder von der Welle eines Bandwickels und der Capstan-Welle Impulse abgeleitet, deren Anzahl pro Zeiteinheit von der Drehgeschwindigkeit der zugehörigen Welle abhängt. Die Steuerschaltung 15 errechnet unter Verwendung der genannten Impulse und unter Verwendung von im Videorecorder abgespeicherten Bandkonstanten die momentane Bandposition. Während dieses Initialisierungslaufes können mittels des Steurspurkopfes 20 die Steuerspurimpulse wiedergegeben und der Steuerschaltung 15 zugeführt werden, welche durch deren Auswertung die Nummer der eingelegten Kassette erkennt. Bei dieser Weiterbildung ist es nicht notwendig, die eingelegte Kasssette erst an den Bandanfang zurückzuspulen und dann den Bandzähler auf Null zu setzen.

Bei einer fünften Ausführungsform der Erfindung erfolgt die Darstellung des aufgezeichneten Titels am Bildschirm nur für eine bestimmte Zeitdauer nach dem Anfang des jeweiligen Musikstückes, beispielsweise für Dauer von 10 Sekunden.

Dazu werden - wie es bereits im Zusammenhang mit der ersten Ausführungsform beschrieben wurde - zu Beginn jedes der Musikstücke die Steuerspurimpulse entweder in Ansprache auf einen mittels des Fernbedienungsgebers 16 eingegebenen Befehl oder automatisch, z.B. unter Verwendung einer Pausenkennung zwischen zwei Musikstücken, zur Aufzeichnung eines Markiersignals impulsbreitenmoduliert aufgezeichnet. Wird bei der Wiedergabe einer derartigen Aufzeichnung durch Auswertung der Steuerspurimpulse ein Markiersignal erkannt, dann initiiert die Steuerschaltung 15 die Anzeige des zugehörigen Titels für die genannte Zeitdauer, ansonsten wird der Bildschirm dunkel gesteuert.

Alternativ dazu kann diese Ausführungsform auch dadurch realisiert werden, daß von den im Bandstandsspeicher 19 abgespeicherten Informationen, zu denen u.a. der Anfangsbandstand jedes der aufgezeichneten Musikstücke gehört, Gebrauch gemacht wird. Die Steuerschaltung 15 vergleicht den vom Bandzähler 21 gelieferten momentanen Bandstand mit den abgespeicherten Anfangsbandständen, initiiert die Anzeige des jeweiligen Titels dann, wenn der vom Bandzähler gelieferte Bandstand mit dem Anfangsbandstand eines der aufgezeichneten Musikstücke übereinstimmt, und hält die Anzeige solange aufrecht, bis die oben genannte Zeitdauer abgelaufen ist.

Bei einer vorteilhaften Weiterbildung dieser Ausführungsform hat der Benutzer durch Betätigung einer Taste des Fernbedienungsgebers 16 die Möglichkeit, auch während der Zeit, in der der Bildschirm dunkel gesteuert wäre, sich den Titel des momentan wiedergegebenen Musikstückes anzeigen zu lassen. Dies erfolgt ebenso, wie es oben im Zusammenhang mit der zweiten Ausführungsform beschrieben wurde.

Bei einer sechsten Ausführungsform der Erfindung wird in den bei einer Verwendung des Videorecorders als HiFi-Audiorecorder normalerweise unbenutzten Videoschrägspuren als Textsignal eine Übersetzung der in den Audioschrägspuren aufgezeichneten fremdsprachigen Musiksendung aufgezeichnet. Wenn beispielsweise im Rahmen der Musiksendung englischsprachige Lieder gesungen werden, so kann das Textsignal eine deutschsprachige Übersetzung dieser Lieder sein.

## Patentansprüche

1. Videorecorder zur Aufzeichnung von Audiosignalen mit
- rotierenden Audioköpfen zur Aufzeichnung der Audiosignale in Schrägspuren eines Magnetbandes,
- einem Videosignalfrequenzmodulator zur Frequenzmodulation eines Trägers mit Videosignalen,
- rotierenden Videoköpfen zur Aufzeichnung der Ausgangssignale des Videosignalfrequenzmodulators in denselben Schrägspuren des Magnetbandes, wobei die Eindringtiefe der mittels der rotierenden Videoköpfe aufgezeichneten Signale kleiner ist als die Eindringtiefe der mittels der rotierenden Audioköpfe aufgezeichneten Audiosignale,
**dadurch gekennzeichnet**, daß er weiterhin aufweist:
- eine Bedieneinheit (16, 17) zur Eingabe von alphanumerischen Textsignalen und von Steuerbefehlen,
- einen Textspeicher (18) zur Zwischenspeicherung der mittels der Bedieneinheit (16, 17) eingegebenen Textsignale, und
- eine Steuerschaltung (15), die in Ansprache auf die Steuerbefehle die Weiterleitung der zwischengespeicherten Textsignale über den Videosignalfrequenzmodulator (10) zu den rotierenden Videoköpfen (12) auslöst.

2. Videorecorder nach Anspruch 1,
**dadurch gekennzeichnet,** daß er einen Bandstandsspeicher (19) zur Abspeicherung von Bandstandsinformationen aufweist, die den Bandständen der Anfänge der einzelnen Audioaufzeichnungen auf dem Magnetband entsprechen.

3. Videorecorder nach Anspruch 1 oder 2,
**dadurch gekennzeichnet,** daß er einen Magnetkopf (20) aufweist, der an einer dem Anfang jeder Audio-Aufzeichnung eines Magnetbandes entsprechenden Bandstelle ein Markiersignal aufzeichnet.

4. Videorecorder nach Anspruch 3,
**dadurch gekennzeichnet**, daß der Magnetkopf (20) ein Steuerspurmagnetkopf ist, mittels dessen impulsförmige Referenzsignale für die Servoschaltungen des Videorecorders aufgezeichnet werden und welcher das Markiersignal durch Impulsbreitenmodulation dieser impulsförmigen Referenzsignale aufzeichnet.

5. Videorecorder nach einem oder mehreren der vorhergehenden Ansprüche,
**dadurch gekennzeichnet**, daß er einen Magnetkopf (20) zur Aufzeichnung eines der laufenden Nummer einer Magnetbandkassette entsprechenden Signals aufweist.

6. Videorecorder nach Anspruch 5,
**dadurch gekennzeichnet**, daß der Magnetkopf (20) ein Steuerspurmagnetkopf ist, mittels dessen impulsförmige Referenzsignale für die Servoschaltungen des Videorecorders aufgezeichnet werden, und das der laufenden Nummer der Magnetbandkassette entsprechende Signal durch Impulsbreitenmodulation dieser impulsförmigen Referenzsignale aufgezeichnet wird.

7. Videorecorder nach Anspruch 5 oder 6,
**dadurch gekennzeichnet**, daß die Zuordnung der laufenden Nummer zu einer Magnetbandkassette mittels der Bedieneinheit (16, 17) erfolgt.

8. Videorecorder nach Anspruch 5 oder 6,
**dadurch gekennzeichnet**, daß die Steuerschaltung (15) durch Auswertung des vom Magnetkopf (20) wiedergegebenen Signals erkennt, ob einer eingelegten Magnetbandkassette bereits eine laufende Nummer zugeordnet ist, und - wenn dies nicht der Fall ist - der eingelegten Magnetbandkassette automatisch eine laufende Nummer zuordnet.

9. Videorecorder nach Anspruch 6, 7 oder 8,
**dadurch gekennzeichnet**, daß der Bandstandsspeicher (19) zur Abspeicherung von einer Vielzahl von Magnetbandkassetten zugeordneten Daten dimensioniert ist und die Steuerschaltung (15) den Speicher (19) derart adressiert, daß die Bandstände der Anfänge der einzelnen Audioaufzeichnungen auf dem Magnetband dieser Magnetbandkassette in einem gemeinsamen, der laufenden Nummer der Kassette zugeordneten Speicherbereich des Speichers (19) abgespeichert werden.

10. Videorecorder nach einem oder mehreren der Ansprüche 1 bis 9,
**dadurch gekennzeichnet,** daß er Mittel (20) zur Aufzeichnung eines Kennsignals aufweist, welches die Aufzeichnung als reine HiFi-Audioaufzeichnung kennzeichnet.

11. Videorecorder nach Anspruch 10,
**dadurch gekennzeichnet,** daß die Mittel zur Aufzeichnung des Kennsignals der Steuerspurmagnetkopf (20) sind, mittels dessen impulsförmige Referenzsignale für die Servoschaltungen des Videorecorders aufgezeichnet werden, und das Kennsignal durch Impulsbreitenmodulation dieser impulsförmigen Referenzsignale aufgezeichnet wird.

12. Videorecorder zur Wiedergabe von Audiosignalen, mit
- rotierenden Audioköpfen zur Wiedergabe der Audiosignale aus Schrägspuren eines Magnetbandes,
- rotierenden Videoköpfen zur Wiedergabe von Signalen, die mit im Vergleich zur Eindringtiefe der Audiosignalaufzeichnung geringerer Eindringtiefe aufgezeichnet sind, aus denselben Schrägspuren des Magnetbandes, und
- einem Frequenzdemodulator zur Frequenzdemodulation der mittels der rotierenden Videoköpfe wiedergegebenen Signale,
**dadurch gekennzeichnet,** daß er weiterhin aufweist:
- Mittel (20) zur Wiedergabe eines Kennsignals, welches die Aufzeichnung als reine HiFi-Audioaufzeichnung kennzeichnet, und
- eine Steuerschaltung (15), die bei Vorliegen des Kennsignals die Darstellung der Ausgangssignale des Frequenzdemodulators (13) auf einem an den Videorecorder angeschlossenen Bildschirm nur in Ansprache auf einen mittels der Bedieneinheit (16) eingegebenen Steuerbefehl freigibt.

13. Videorecorder nach Anspruch 12,
**dadurch gekennzeichnet,** daß die mittels der rotierenden Videoköpfe (12) wiedergegebenen Signale Textsignale sind, die dem Titel eines der auf dem Magnetband aufgezeichneten Audiosignale entsprechen.

14. Videorecorder nach Anspruch 12,
**dadurch gekennzeichnet**, daß die mittels der rotierenden Videoköpfe (12) wiedergegebenen Signale Textsignale sind, die einer Übersetzung der aufgezeichneten Audiosignale in eine andere Sprache entsprechen.

15. Videorecorder nach Anspruch 12,
**dadurch gekennzeichnet**, daß die mittels der rotierenden Videoköpfe (12) wiedergegebenen Signale Textsignale sind, die einer Tabelle entsprechen, welche eine Übersicht über die Titel der auf dem Magnetband aufgezeichneten Audiosignale enthält.

16. Videorecorder nach Anspruch 15,
**dadurch gekennzeichnet**, daß die Steuerschaltung (15) durch Auswertung des Ausgangssignals eines Bandzählers (21) ein Markiersignal erzeugt, welches in der Tabelle zur optischen Markierung eines der Titel verwendet wird.

17. Videorecorder nach Anspruch 16,
**dadurch gekennzeichnet**, daß er
- einen Magnetkopf (20) zur Wiedergabe eines der laufenden Nummer einer Magnetbandkassette entsprechenden Signals,
- einen Bandstandsspeicher (19), welcher zur Abspeicherung von einer Vielzahl von Magnetbandkassetten zugeordneten Bandstandsinformationen dimensioniert ist, und
- einen Wiedergabe-Programmierspeicher (22) aufweist, und daß
- die Steuerschaltung (15) in Ansprache auf eine mittels der Bedieneinheit (16) getätigten Auswahl eines der in der Tabelle dargestellten Titel die zugehörigen Bandstandsinformationen vom Bandstandsspeicher (19) in den Wiedergabe-Programmierspeicher (22) überträgt.

18. Videorecorder nach Anspruch 17,
**dadurch gekennzeichnet,** daß die Steuerschaltung (15) nach dem Einlegen einer Magnetbandkassette einen automatischen Initialisierungslauf zur Ermittlung der momentanen Bandposition und zur Erkennung der Kassettennummer initiiert.

19. Videorecorder zur Wiedergabe von Audiosignalen, mit
- rotierenden Audioköpfen zur Wiedergabe der Audiosignale aus Schrägspuren eines Magnetbandes,
- rotierenden Videoköpfen zur Wiedergabe von Signalen, die mit im Vergleich zur Eindringtiefe der Audiosignalaufzeichnung geringerer Eindringtiefe aufgezeichnet sind, aus denselben Schrägspuren des Magnetbandes, und
- einem Frequenzdemodulator zur Frequenzdemodulation der mittels der rotierenden Videoköpfe wiedergegebenen Signale,
**dadurch gekennzeichnet,** daß er weiterhin aufweist:
- eine Erkennungsschaltung (15, 19, 20) zur Erkennung des Anfangs einer wiedergegebenen Audioaufzeichnung, und
- eine Steuerschaltung (15), die bei erkanntem Anfang einer wiedergegebenen Audioaufzeichnung die Darstellung der Ausgangssignale des Frequenzdemodulators (13) auf einem an den Videorecorder angeschlossenen Bildschirm automatisch für eine vorgegebene Dauer freigibt, wobei die Ausgangssignale des Frequenzdemodulators (13) dem Titel der wiedergegebenen Audioaufzeichnung entsprechen.

## Claims

1. Video recorder for recording audio signals comprising
- rotating audio heads for recording the audio signals in helical tracks of a magnetic tape,
- a video signal frequency modulator for frequency modulation of a carrier with video signals,
- rotating video heads for recording the output signals of the video signal frequency modulator in the same helical tracks of the magnetic tape, the penetration depth of the signals recorded by means of the rotating video heads being less than the penetration depth of the audio signals recorded by means of the rotating audio heads,
characterized in that it furthermore comprises:
- an operating unit (16, 17) for inputting alphanumerical text signals and control commands,
- a text memory (18) for the temporary storage of the text signals inputted by means of the operating unit (16, 17), and
- a control circuit (15) which, in response to the control commands, triggers the transfer of the temporarily stored text signals to the rotating video heads (12) via the video signal frequency modulator (10).

2. Video recorder according to Claim 1, characterized in that it comprises a tape-position memory (19) for storing tape-position information which corresponds to the tape positions of the starts of the individual audio recordings on the magnetic tape.

3. Video recorder according to Claim 1 or 2, characterized in that it comprises a magnetic head (20) which records a marking signal at a tape position corresponding to the start of each audio recording on a magnetic tape.

4. Video recorder according to Claim 3, characterized in that the magnetic head (20) is a control-track magnetic head by means of which pulse-type reference signals are recorded for the servo circuits of the video recorder and which records the marking signal by impulse-width modulation of said pulse-type reference signals.

5. Video recorder according to one or more of the preceding claims, characterized in that it comprises a magnetic head (20) for recording a signal corresponding to the serial number of a magnetic-tape cassette.

6. Video recorder according to Claim 5, characterized in that the magnetic head (20) is a control-track magnetic head by means of which pulse-type reference signals are recorded for the servo circuits of the video recorder and the signal corresponding to the serial number of the magnetic-tape cassette is recorded by impulse-width modulation of said impulse-type reference signals.

7. Video recorder according to Claim 5 or 6, characterized in that the serial number is assigned to a magnetic-tape cassette by means of the operating unit (16, 17).

8. Video recorder according to Claim 5 or 6, characterized in that the control circuit (15) detects, by evaluating the signal reproduced by the magnetic head (20), whether a serial number is already assigned to an inserted magnetic-tape cassette and, if that is not the case, automatically assigns a serial number to the inserted magnetic-tape cassette.

9. Video recorder according to Claim 6, 7 or 8, characterized in that the tape-position memory (19) is dimensioned to store a multiplicity of data assigned to magnetic-tape cassettes and the control circuit (15) addresses the memory (19) in such a way that the tape positions of the starts of the individual audio recordings on the magnetic tape of said magnetic-tape cassette are stored in a common memory area, assigned to the serial number of the cassette, of the memory (19).

10. Video recorder according to one or more of Claims 1 to 9, characterized in that it comprises means (20) for recording a code signal which characterizes the recording as a pure hi-fi audio recording.

11. Video recorder according to Claim 10, characterized in that the means for recording the code signal are the control-track magnetic head (20) by means of which impulse-type reference signals are recorded for the servo circuits of the video recorder and the code signal is recorded by impulse-width modulation of said impulse-type reference signals.

12. Video recorder for playing back audio signals, comprising
- rotating audio heads for playing back the audio signals from helical tracks of a magnetic tape,
- rotating video heads for playing back signals which are recorded with a smaller penetration depth than the penetration depth of the audio signal recording from the same helical tracks of the magnetic tape, and
- a frequency demodulator for the frequency demodulation of the signals played back by means of the rotating video heads,
characterized in that it furthermore comprises:
- means (20) for playing back a code signal which characterizes the recording as a pure hi-fi audio recording, and
- a control circuit (15) which, if the code signal is present, enables the display of the output signals of the frequency demodulator (13) on a picture screen connected to the video recorder only in response to a control command inputted by means of the operating unit (16).

13. Video recorder according to Claim 12, characterized in that the signals played back by means of the rotating video heads (12) are text signals which correspond to the title of one of the audio signals recorded on the magnetic tape.

14. Video recorder according to Claim 12, characterized in that the signals played back by means of the rotating video heads (12) are text signals which correspond to a translation of the recorded audio signals into another language.

15. Video recorder according to Claim 12, characterized in that the signals played back by means of the rotating video heads (12) are text signals which correspond to a table which contains an overview of the titles of the audio signals recorded on the magnetic tape.

16. Video recorder according to Claim 15, characterized in that the control circuit (15) generates, by evaluating the output signal of a tape counter (21), a marking signal which is used in the table to optically mark one of the titles.

17. Video recorder according to Claim 16, characterized in that it comprises
- a magnetic head (20) for playing back a signal corresponding to one of the serial numbers of a magnetic-tape cassette,
- a tape-position memory (19) which is dimensioned to store a multiplicity of tape-position information assigned to magnetic-tape cassettes, and
- a playback programming memory (22), and in that
- the control circuit (15) transfers the associated tape-position information from the tape-position memory (19) to the playback programming memory (22) in response to a selection, effected by the operating unit 16, of one of the titles displayed in the table.

18. Video recorder according to Claim 17, characterized in that the control circuit (15) initiates, after the insertion of a magnetic-tape cassette, an automatic initialization run to determine the instantaneous tape position and to detect the cassette number.

19. Video recorder for playing back audio signals, comprising
- rotating audio heads for playing back the audio signals from helical tracks of a magnetic tape,
- rotating video heads for playing back signals which are recorded with a smaller penetration depth than the penetration depth of the audio signal recording from the same helical tracks of the magnetic tape, and
- a frequency demodulator for the frequency demodulation of the signals played back by means of the rotating video heads,
characterized in that it furthermore comprises:
- a detection circuit (15, 19, 20) for detecting the start of an audio recording played back, and
- a control circuit (15) which automatically enables for a specified period the display of the output signals of the frequency demodulator (13) on a picture screen connected to the video recorder when the start of a played back audio recording is detected, the output signals of the frequency demodulator (13) corresponding to the title of the played back audio recording.

## Revendications

1. Magnétoscope pour l'enregistrement de signaux audio, comportant
- des têtes audio rotatives pour enregistrer les signaux audio sur des pistes obliques d'une bande magnétique,
- un modulateur de fréquence de signaux vidéo pour la modulation de fréquence d'une porteuse par des signaux vidéo,
- des têtes vidéo rotatives pour enregistrer les signaux de sortie du modulateur de fréquence de signaux vidéo sur les mêmes pistes obliques de la bande magnétique, la profondeur de pénétration des signaux enregistrés au moyen des têtes vidéo rotatives étant inférieure à la profondeur de pénétration des signaux audio enregistrés au moyen des têtes audio rotatives,
caractérisé en ce qu'il comporte en outre :
- une unité de commande (16,17) pour l'introduction de signaux de texte alphanumériques et d'instructions de commande,
- une mémoire de textes (18) pour la mémorisation temporaire des signaux de texte introduits au moyen de l'unité de commande (16,17), et
- un circuit de commande (15), qui, en réponse aux instructions de commande, déclenche la retransmission des signaux de texte mémorisés temporairement, par l'intermédiaire du modulateur de fréquence de signaux vidéo (10) aux têtes vidéo rotatives (12).

2. Magnétoscope selon la revendication 1, caractérisé en ce qu'il comporte une mémoire (19) d'emplacements sur la bande pour mémoriser des informations concernant les emplacements sur la bande, qui correspondent aux emplacements, sur la bande, des débuts des différents enregistrements audio sur la bande magnétique.

3. Magnétoscope selon la revendication 1 ou 2, caractérisé en ce qu'il comporte une tête magnétique (20), qui enregistre un signal de marquage en un emplacement de la bande qui correspond au début de chaque enregistrement audio d'une bande magnétique.

4. Magnétoscope selon la revendication 3, caractérisé en ce que la tête magnétique (20) est une tête magnétique à piste de commande, au moyen de laquelle des signaux impulsionnels de référence sont enregistrés pour les circuits d'asservissement du magnétoscope et qui enregistre le signal de marquage au moyen d'une modulation d'impulsions en durée de ces signaux impulsionnels de référence.

5. Magnétoscope selon une ou plusieurs des revendications précédentes, caractérisé en ce qu'il comporte une tête magnétique (20) pour l'enregistrement d'un signal qui correspond au numéro d'ordre d'une cassette à bande magnétique.

6. Magnétoscope selon la revendication 5, caractérisé en ce que la tête magnétique (20) est une tête magnétique à piste de commande, au moyen de laquelle des signaux impulsionnels de référence pour les circuits d'asservissement de l'enregistrement vidéo sont enregistrés et que le signal, qui correspond au numéro d'ordre de la cassette à bande magnétique, est enregistré au moyen d'une modulation d'impulsions en durée de ces signaux impulsionnels de référence.

7. Magnétoscope selon la revendication 5 ou 6, caractérisé en ce que l'association du numéro d'ordre à une cassette à bande magnétique est réalisée à l'aide de l'unité de commande (16,17).

8. Magnétoscope selon la revendication 5 ou 6, caractérisé en ce que le circuit de commande (15) identifie, au moyen de l'évaluation du signal reproduit par la tête magnétique (20), si à une cassette à bande magnétique insérée est déjà associé un numéro d'ordre et - lorsque ce n'est pas le cas - associe automatiquement un numéro d'ordre à la cassette à bande magnétique insérée.

9. Magnétoscope selon la revendication 6, 7 ou 8, caractérisé en ce que la mémoire (19) des positions de la bande est dimensionnée de manière à mémoriser les données associées à une multiplicité de cassettes à bande magnétique, et le circuit de commande (15) adresse la mémoire (19) de telle sorte que les emplacements des débuts des différents enregistrements audio sur la bande magnétique de cette cassette à bande magnétique sont mémorisés dans une zone commune de la mémoire (19), associée au numéro d'ordre de la cassette.

10. Magnétoscope selon une ou plusieurs des revendications 1 à 9, caractérisé en ce qu'il comporte des moyens (20) pour enregistrer un signal caractéristique, qui caractérise l'enregistrement sous la forme d'un pur enregistrement audio haute fidélité.

11. Magnétoscope selon la revendication 10, caractérisé en ce que les moyens pour enregistrer le signal caractéristique sont constitués par la tête magnétique à piste de commande (20), à l'aide de laquelle des signaux impulsionnels de référence pour les circuits d'asservissement du magnétoscope sont enregistrés, et que le signal caractéristique est enregistré au moyen d'une modulation d'impulsions en durée de ces signaux impulsionnels de référence.

12. Magnétoscope pour la reproduction de signaux audio, comportant :
- des têtes audio rotatives pour reproduire des signaux audio à partir de pistes obliques d'une bande magnétique,
- des têtes vidéo rotatives pour la reproduction de signaux, qui sont enregistrés avec une profondeur de pénétration plus faible que la profondeur de pénétration de l'enregistrement des signaux audio, à partir des mêmes pistes obliques de la bande magnétique, et
- un démodulateur de fréquence pour réaliser la démodulation de fréquence des signaux reproduits au moyen des têtes vidéo rotatives,
caractérisé en ce qu'il comporte en outre :
- des moyens (20) pour reproduire un signal caractéristique, qui caractérise l'enregistrement sous la forme d'un pur enregistrement audio haute fidélité, et
- un circuit de commande (15), qui, lors de la présence du signal caractéristique, autorise la représentation des signaux de sortie du démodulateur de fréquence (13) sur un écran raccordé au magnétoscope, uniquement en réponse à une instruction de commande introduite au moyen de l'unité de commande (16).

13. Magnétoscope selon la revendication 12, caractérisé en ce que les signaux reproduits au moyen des têtes vidéo rotatives (12) sont des signaux de texte, qui correspondent au titre de l'un des signaux audio enregistré sur la bande magnétique.

14. Magnétoscope selon la revendication 12, caractérisé en ce que les signaux reproduits au moyen des têtes vidéo rotatives (12) sont des signaux de texte, qui correspondent à une traduction des signaux audio enregistrés dans une autre langue.

15. Magnétoscope selon la revendication 12, caractérisé en ce que les signaux reproduits au moyen des têtes vidéo rotatives (12) sont des signaux de texte, qui correspondent à une table qui contient une vue d'ensemble des titres des signaux audio enregistrés sur la bande magnétique.

16. Magnétoscope selon la revendication 15, caractérisé en ce que le circuit de commande (15) produit, par évaluation du signal de sortie d'un compteur de bande (21), un signal de marquage, qui est utilisé dans la table pour marquer optiquement l'un des titres.

17. Magnétoscope selon la revendication 16, caractérisé en ce qu'il comporte
- une tête magnétique (20) pour reproduire un signal correspondant au numéro d'ordre de la cassette à bande magnétique,
- une mémoire (19) d'emplacements sur la bande, qui est dimensionnée pour mémoriser des informations d'emplacements sur la bande, qui sont associées à une multiplicité de cassettes à bande magnétique, et
- une mémoire de programmation de reproduction (22),
et en ce que
- en réponse à une sélection, déclenchée au moyen de l'unité de commande (16), d'un titre représenté dans la table, le circuit de commande (15) transmet les informations associées des emplacements sur la bande de la mémoire (19) d'emplacements sur la bande dans la mémoire de programmation de reproduction (22).

18. Magnétoscope selon la revendication 17, caractérisé en ce qu'après l'insertion d'une cassette à bande magnétique, le circuit de commande (15) déclenche un cycle automatique d'initialisation pour déterminer l'emplacement instantané sur la bande et identifier le numéro de la cassette.

19. Magnétoscope pour la reproduction de signaux audio, comportant
- des têtes audio rotatives pour la reproduction des signaux audio à partir de pistes obliques d'une bande magnétique,
- des têtes vidéo rotatives pour la reproduction de signaux, qui sont enregistrés avec une profondeur de pénétration inférieure que la profondeur de pénétration de l'enregistrement des signaux audio, à partir des mêmes pistes obliques de la bande magnétique, et
- un démodulateur de fréquence pour réaliser la démodulation de fréquence des signaux reproduits au moyen des têtes vidéo rotatives,
caractérisé en ce qu'il comporte en outre :
- un circuit d'identification (15,19,20) pour identifier le début d'un enregistrement audio reproduit, et
- un circuit de commande (15), qui, lorsque le début d'un enregistrement audio reproduit est identifié, autorise automatiquement, pendant une durée prédéterminée, la représentation des signaux du démodulateur de fréquence (13) sur un écran raccordé au magnétoscope, les signaux de sortie du démodulateur de fréquence (13) correspondant au titre de l'enregistrement audio reproduit.
